# EUROPEAN PATENT SPECIFICATION

(11) **EP 4 307 044 B1**
(45) Date of publication and mention of the grant of the patent: **08.04.2026**
(21) Application number: 23211925.5
(22) Date of filing: 25.09.2017
(51) Int. Cl.: C08J 7/04, G02B 5/00, G02B 7/02, G02B 27/00, G03B 11/04, G03B 9/02

(54) **LAMINATED LIGHT-SHIELDING FILM AND LIGHT-SHIELDING RING FOR OPTICAL APPARATUS USING SAME, LENS UNIT, AND CAMERA MODULE**
LAMINIERTER LICHTABSCHIRMENDER FILM UND LICHTABSCHIRMENDER RING FÜR OPTISCHE VORRICHTUNG DAMIT, LINSENEINHEIT UND KAMERAMODUL
FILM STRATIFIÉ DE PROTECTION CONTRE LA LUMIÈRE ET ANNEAU DE PROTECTION CONTRE LA LUMIÈRE POUR APPAREIL OPTIQUE L'UTILISANT, UNITÉ DE LENTILLE ET MODULE DE CAMÉRA

(30) Priority: 06.10.2016 JP 2016198372
(43) Date of publication of application: 17.01.2024
(62) Divisional of application: 17858240.9
(73) Proprietor: Kimoto Co., Ltd., Saitama 338-0013 (JP)
(72) Inventor: NAGAHAMA, Tsuyoshi, Saitama, 3380013 (JP); TOSHIMA, Yasumaro, Saitama, 3380013 (JP); UEGAKI, Satoshi, Saitama, 3380013 (JP); YAMAMOTO, Hiroki, Saitama, 3380013 (JP)
(74) Representative: Strehl & Partner mbB

(56) References cited:
- EP-A1- 2 573 595
- WO-A1-2009/014264
- WO-A1-2016/006324
- JP-A- 2006 085 026
- JP-A- 2010 069 760
- JP-A- H10 148 702
- JP-A- H11 301 117
- US-A1- 2007 236 627
- US-A1- 2015 022 896
- US-A1- 2017 146 701

## Description

### Technical Field

The present invention relates to a multilayer light-blocking film, and a light-blocking ring for optical equipment, a lens unit, and a camera module using the same.

### Background Art

A camera module for taking an image of an object and converting it into an image signal is built into electronic equipment, for example, an information communication terminal such as a cellular phone or a smartphone, or a digital camera. This camera module comprises an image pickup device for picking up an image of an object, and a lens unit for forming the image of the object on this image pickup device. The lens unit is usually composed of a combination of a plurality of lenses.

In this type of camera module, it is required to remove unnecessary incident light and reflected light, prevent the occurrence of halation, lens flare, a ghost, and the like, and improve the image quality of a picked-up image. Therefore, lens units, camera modules, and the like having light-blocking members for cutting unnecessary light are proposed.

As such light-blocking members, light-blocking films in which light-blocking layers containing carbon black, a lubricant, fine particles, and a binder resin are formed on both surfaces of a substrate film are proposed (see Patent Literatures 1 and 2).

### Citation List

### Patent Literature

Patent Literature 1: Japanese Patent Laid-Open No. 9-274218
Patent Literature 2: WO2006/016555

A multilayer-light blocking film with the features in the pre-characterizing portion of Claim 1 is disclosed in WO 2016 006 324 A1. Further light-blocking films related to the present invention are disclosed in JP H10 148702, WO 2009 014264, US 2015 022 896, JP H11 30117, JP 2010 069 760 and US 2007 236 627.

### Summary of Invention

### Technical Problem

In recent years, modularization has advanced worldwide, and modules have been manufactured and controlled in manufacturing plants in the countries of the world in the form of a lens unit including a plurality of lenses and light-blocking plates stacked in the optical axis direction, a camera module in which an image pickup device is further incorporated into this lens unit, or the like. With this, a light-blocking film or a light-blocking member that is one part of each module is also conveyed, and manufactured and controlled, in each place.

Here, when a light-blocking member having a desired shape is made from a light-blocking film, or when a light-blocking member is incorporated into a module, manufacturing failure such as poor incorporation can be caused unless the front and back surfaces of the light-blocking film or the light-blocking member are discriminated. In these days when transworld modularization advances, it is not easy to promote the thoroughness of the control (the confirmation of the front and back surfaces) of a light-blocking film or a light-blocking member worldwide.

In addition, due to the advancement of the miniaturization and film thinning of camera modules, light-blocking members of extremely small size have been mounted. For a light-blocking film in which black light-blocking layers are provided, when the size is several centimeters square or less, it is extremely difficult to discriminate the front and back of the light-blocking film. Especially, for a light-blocking film having high blackness (in other words, having high optical density), this tendency is significant.

The present invention has been made in view of the above problems. Specifically, it is an object of the present invention to provide a multilayer light-blocking film whose front and back surfaces are easy to discriminate while it has black light-blocking layers, and a light-blocking ring for optical equipment, a lens unit, a camera module, and the like using the same.

### Solution to Problem

The present inventors have studied diligently from a human engineering approach in order to solve the above problems. As a result, the present inventors have found that the above problems can be solved by differentiating the 60-degree glossinesses and/or lightness indices L* of black light-blocking layers, and by further allowing the end surfaces to function as marks as needed, and completed the present invention.

The multilayer light-blocking film and the light-blocking ring for optical equipment of the present invention are defined in the independent claims. Further advantageous features are set out in the dependent claims.

In addition, the present invention embraces the various specific modes shown below.
(1) A multilayer light-blocking film comprising a multilayer structure comprising at least a first black light-blocking layer and a second black light-blocking layer, wherein the first black light-blocking layer and the second black light-blocking layer each have an optical density of 2.5 or more and a 60-degree glossiness of 5.0% or less, and the first black light-blocking layer has a 60-degree glossiness and/or a lightness L* different from a 60-degree glossiness and/or lightness L* of the second black light-blocking layer.
(2) The multilayer light-blocking film according to the above (1), wherein the first black light-blocking layer and/or the second black light-blocking layer have inclined end surfaces so that a film width increases from the first black light-blocking layer toward the second black light-blocking layer, and the inclined end surface is exposed in a planar view seen from a normal direction of a major surface of the first black light-blocking layer.
(3) The multilayer light-blocking film according to the above (2), wherein an inclination angle between the major surface of the first black light-blocking layer and the inclined end surface is 10 to 87°.
(4) The multilayer light-blocking film according to any one of the above (1) to (3), wherein a difference between the 60-degree glossiness of the first black light-blocking layer and the 60-degree glossiness of the second black light-blocking layer is 1.0 to 4.5%.
(5) The multilayer light-blocking film according to any one of the above (1) to (4), comprising a multilayer structure comprising at least a substrate film, the first black light-blocking layer provided on one major surface side of the substrate film, and the second black light-blocking layer provided on the other major surface side of the substrate film.
(6) The multilayer light-blocking film according to the above (5), wherein the substrate film has a total light transmittance of 80.0 to 99.9%.
(7) The multilayer light-blocking film according to the above (5) or (6), wherein the substrate film has a thickness of 0.5 µm or more and 50 µm or less.
(8) A light-blocking ring for optical equipment, having a ring-shaped outer shape, and comprising a multilayer structure comprising at least a first black light-blocking layer and a second black light-blocking layer, wherein the first black light-blocking layer and the second black light-blocking layer each have an optical density of 2.5 or more and a 60-degree glossiness of 5.0% or less, and the first black light-blocking layer has a 60-degree glossiness and/or a lightness L* different from a 60-degree glossiness and/or lightness L* of the second black light-blocking layer.
(9) The light-blocking ring for optical equipment according to the above (8), wherein the first black light-blocking layer and/or the second black light-blocking layer have inclined end surfaces so that a film width increases from the first black light-blocking layer toward the second black light-blocking layer, and the inclined end surface is exposed in a planar view seen from a normal direction of a major surface of the first black light-blocking layer.
(10) The light-blocking ring for optical equipment according to the above (9), comprising a multilayer structure comprising at least a substrate film, the first black light-blocking layer provided on one major surface side of the substrate film, and the second black light-blocking layer provided on the other major surface side of the substrate film.
(11) A lens unit comprising a plurality of lenses and at least one or more light-blocking plates stacked in an optical axis direction of the lenses, wherein at least one or more of the light-blocking plates comprise the multilayer light-blocking film according to any one of the above (1) to (7) and/or the light-blocking ring for optical equipment according to any one of the above (8) to (10).
(12) A camera module comprising at least: a lens unit comprising a plurality of lenses and at least one or more light-blocking plates stacked in an optical axis direction of the lenses; and an image pickup device for picking up an image of an object through the lens unit, wherein at least one or more of the light-blocking plates comprise the multilayer light-blocking film according to any one of the above (1) to (7) and/or the light-blocking ring for optical equipment according to any one of the above (8) to (10).

### Advantageous Effects of Invention

According to the present invention, it is possible to provide a multilayer light-blocking film and a light-blocking ring for optical equipment whose front and back are easy to discriminate while they have black light-blocking layers. By using these multilayer light-blocking film and light-blocking ring for optical equipment, handling properties at a module manufacturing site are improved, and the burden of parts control can be reduced. Therefore, the occurrence of manufacturing failure such as poor incorporation can be suppressed, and the yield can be improved. Therefore, a lens unit, a camera module, and the like using these have excellent productivity and economy.

### Brief Description of Drawings

[Figure 1] Figure 1 is a cross-sectional view schematically showing a multilayer light-blocking film and its rolled web in one embodiment.
[Figure 2] Figure 2 is a view of the II-II cross section in Figure 1.
[Figure 3] Figure 3 is a plan view of the multilayer light-blocking film in one embodiment.
[Figure 4] Figure 4 is an exploded perspective view schematically showing light-blocking rings for optical equipment (multilayer light-blocking films), and a lens unit and a camera module using the same, in one embodiment.
[Figure 5] Figure 5 is a cross-sectional view schematically showing the light-blocking ring for optical equipment (multilayer light-blocking film) in one embodiment.

### Description of Embodiments

Embodiments of the present invention will be described in detail below with reference to the drawings. Positional relationships such as top, bottom, left, and right are based on the positional relationships shown in the drawings unless otherwise noted. The dimensional ratios in the drawings are not limited to the ratios shown. However, the following embodiments are illustrations for explaining the present invention, and the present invention is not limited to these. As used herein, for example, the description of the numerical value range "1 to 100" includes both the upper limit value "1" and the lower limit value "100". The same applies to the description of other numerical value ranges.

### (First Embodiment)

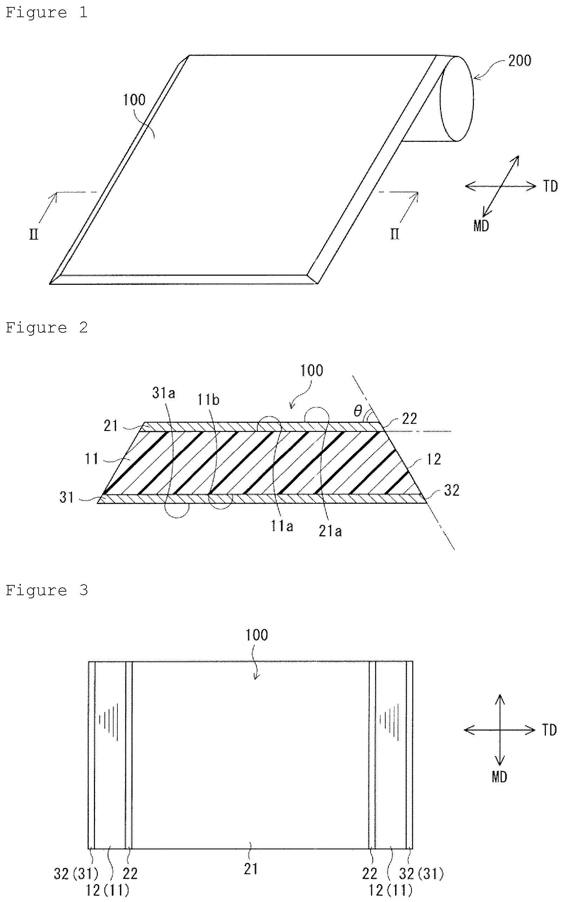

Figure 1 is a cross-sectional view schematically showing a multilayer light-blocking film 100 and its web roll 200 in a first embodiment of the present invention, and Figure 2 is a cross-sectional view showing the main part of the multilayer light-blocking film 100 (the II-II cross section in Figure 1). Figure 3 is a plan view of the multilayer light-blocking film 100. This multilayer light-blocking film 100 comprises at least a substrate film 11, a first black light-blocking layer 21 provided on one major surface 11a side of this substrate film 11, and a second black light-blocking layer 31 provided on the other major surface 11b side. The multilayer light-blocking film 100 has a multilayer structure (three-layer structure) in which the black light-blocking layer 21, the substrate film 11, and the black light-blocking layer 31 are at least arranged in this order. By winding this multilayer light-blocking film 100 in the form of a cored or coreless roll, the rolled web 200 that is a wound body is formed.

As used herein, "provided on one (the other) major surface side of the substrate film " means including not only a mode in which the black light-blocking layer 21 or 31 is directly placed on a surface (for example, the major surface 11a or the major surface 11b) of the substrate film 11 as in this embodiment, but a mode in which an optional layer (for example, a primer layer or an adhesive layer) is interposed between a surface of the substrate film 11 and the black light-blocking layer 21 or 31. A multilayer structure comprising at least the first black light-blocking layer 21 and the second black light-blocking layer 31 means including not only a structure in which only the first black light-blocking layer 21 and the second black light-blocking layer 31 are directly layered, but the above-described three-layer structure and a multilayer structure of four or more layers in which an optional layer or optional layers are further provided in a three-layer structure.

The type of the substrate film 11 is not particularly limited as long as it can support the black light-blocking layers 21 and 31. From the viewpoint of dimensional stability, mechanical strength, weight reduction, and the like, synthetic resin films are preferably used. Specific examples of the synthetic resin films include polyester films, ABS (acrylonitrile-butadiene-styrene) films, polyimide films, polystyrene films, and polycarbonate films. Acrylic, polyolefin-based, cellulosic, polysulfone-based, polyphenylene sulfide-based, polyethersulfone-based, and polyetheretherketone-based films can also be used. Among these, as the substrate film 11, polyester films are preferably used. Especially, uniaxially or biaxially stretched films, particularly biaxially stretched polyester films, have excellent mechanical strength and dimensional stability and therefore are particularly preferred. For heat-resistant applications, uniaxially or biaxially stretched polyimide films are particularly preferred. One of these can be used alone, and two or more of these can also be used in combination.

The thickness of the substrate film 11 can be appropriately set according to the required performance and the application and is not particularly limited. From the viewpoint of weight reduction and film thinning, the thickness of the substrate film 11 is preferably 0.5 µm or more and 50 µm or less, more preferably 1 µm or more and 25 µm or less, further preferably 4 µm or more and 10 µm or less, and particularly preferably 5 µm or more and 7 µm or less. From the viewpoint of improving adhesiveness to the black light-blocking layers 21 and 31, the surfaces of the substrate film 11 can also be subjected to various known surface treatments such as anchor treatment and corona treatment as needed.

Inclined end surfaces 12 are provided on the outer peripheral side surfaces (outer peripheral end surfaces) of the substrate film 11. Due to these inclined end surfaces 12, the cross-sectional structure of the substrate film 11 has a trapezoidal shape in which the lower base is longer than the upper base, so that the film width of the substrate film 11 increases from the black light-blocking layer 21 toward the black light-blocking layer 31 (see Figure 2).

These inclined end surfaces 12 are provided so as to be exposed in a planar view from the normal direction of the major surface 11a of the substrate film 11 so as to be visible from the major surface 11a side of the substrate film 11 when the substrate film 11 is brought into a flat state as shown in Figure 2 (see Figure 3). Specifically, the inclination angle θ (depression angle θ) between the major surface 11a and the inclined end surface 12 of the substrate film 11 is set to be 10 to 87°. From the viewpoint of improving the visibility of the inclined end surfaces 12 in a planar view from the major surface 11a side, maintaining the strength of the end surfaces of the substrate film 11, maintaining productivity, and the like, the inclination angle θ is preferably 30 to 85°, more preferably 40 to 83°, and further preferably 45 to 80°. As long as the inclined end surfaces 12 are visible from the major surface 11a side of the substrate film 11, for example, transparent or semitransparent protective layers or the like may be provided on the inclined end surfaces 12 for film end surface strengthening.

The appearance of the substrate film 11 may be any of transparent, semitransparent, and opaque appearance and is not particularly limited. For example, foamed synthetic resin films such as foamed polyester films, and synthetic resin films in which black pigments such as carbon black or other pigments are contained can also be used. From the viewpoint of improving the visibility of the inclined end surfaces 12 in a planar view from the major surface 11a side, the substrate film 11 preferably has a total light transmittance of 80.0 to 99.9%, more preferably 83.0 to 99.0%, and further preferably 85.0 to 99.0%.

The black light-blocking layers 21 and 31 are light-blocking films having an optical density (OD) of 2.5 or more and a 60-degree glossiness (G60) of 5.0% or less.

As used herein, the optical density (OD) is a value obtained by measuring in accordance with JIS-K7651: 1988 using an optical densitometer (TD-904: GretagMacbeth) and a UV filter. From the viewpoint of having higher light-blocking properties, the black light-blocking layers 21 and 31 each preferably have an optical density (OD) of 2.7 or more for a single layer. When the black light-blocking layers 21 and 31 are layered, the optical density (OD) of the layered body is preferably 4.5 to 6.0, more preferably 5.0 to 6.0.

The 60-degree glossiness is a value obtained by measuring the glossiness (specular glossiness) (%) of the surface of the black light-blocking layer 21 or 31 at incidence and acceptance angles of 60° in accordance with JIS-Z8741: 1997 using a digital variable angle glossmeter (UGV-5K: manufactured by Suga Test Instruments Co., Ltd.). From the viewpoint of suppressing the reflection of incident light and increasing light absorption properties, the black light-blocking layers 21 and 31 preferably have a 60-degree glossiness of 3.0% or less, more preferably 1.0% or less.

As the light-blocking film having an optical density of 2.5 or more and a 60-degree glossiness of 5.0% or less, those known in the industry can be used, and the type of the light-blocking film is not particularly limited. For example, as the black-based light-blocking film, a black light-blocking film containing at least a binder resin and a black pigment is preferably used. This black light-blocking film will be described in detail below as an example.

Examples of the binder resin include, but are not particularly limited to, thermoplastic resins or thermosetting resins such as poly(meth)acrylic acid-based resins, polyester-based resins, polyvinyl acetate-based resins, polyvinyl chloride-based resins, polyvinyl butyral-based resins, cellulosic resins, polystyrene/polybutadiene resins, polyurethane-based resins, alkyd resins, acrylic resins, unsaturated polyester-based resins, epoxy ester-based resins, epoxy-based resins, epoxy acrylate-based resins, urethane acrylate-based resins, polyester acrylate-based resins, polyether acrylate-based resins, phenolic resins, melamine-based resins, urea-based resins, and diallyl phthalate-based resins. Thermoplastic elastomers, thermosetting elastomers, ultraviolet curable resins, electron beam curable resins, and the like can also be used. One of these can be used alone, and two or more of these can also be used in combination. The binder resin can be appropriately selected and used according to the required performance and the application. For example, in applications where heat resistance is required, thermosetting resins are preferred.

The content (total amount) of the binder resin in the black light-blocking layer 21 or 31 is not particularly limited but is preferably 40 to 90% by mass, more preferably 50 to 85% by mass, and further preferably 60 to 80% by mass from the viewpoint of adhesiveness, light-blocking properties, scratch resistance, sliding properties, flatting properties, and the like.

The black pigment colors the binder resin black to provide light-blocking properties. Specific examples of the black pigment include, but are not particularly limited to, black resin particles, titanium black, magnetite-based black, copper-iron-manganese-based black, titanium black, and carbon black. Among these, black resin particles, titanium black, and carbon black are preferred because of excellent concealing properties, and carbon black is more preferred. One of these can be used alone, and two or more of these can also be used in combination.

As the carbon black, those made by various known manufacturing methods, such as oil furnace black, lamp black, channel black, gas furnace black, acetylene black, thermal black, and ketjen black, are known, but the type of the carbon black is not particularly limited. From the viewpoint of providing conductivity to the black light-blocking layer 21 or 31 to prevent electrostatic charging, conductive carbon black is particularly preferably used. The history of carbon black is old, and various grades of carbon black simple substances and carbon black dispersions are commercially available from, for example, Mitsubishi Chemical Corporation, Asahi Carbon Co., Ltd., MIKUNI COLOR LTD., RESINO COLOR INDUSTRY CO., LTD., Cabot, and DEGUSSA. The carbon black should be appropriately selected from among these according to the required performance and the application. The particle size of the carbon black can be appropriately set according to the required performance and the like and is not particularly limited. The average particle diameter D₅₀ of the carbon black is preferably 0.01 to 2.0 µm, more preferably 0.05 to 0.1 µm, and further preferably 0.08 to 0.5 µm. The average particle diameter herein means a volume-based median diameter (D₅₀) measured by a laser diffraction particle size distribution measuring apparatus (for example, SHIMADZU CORPORATION: SALD-7000).

The content (total amount) of the black pigment in the black light-blocking layer 21 or 31 is not particularly limited but is preferably 10 to 60% by mass, more preferably 15 to 50% by mass, and further preferably 20 to 40% by mass in terms of solids based on all resin components contained in the black light-blocking layer 21 or 31 (phr) from the viewpoint of dispersibility, film-forming properties, handling properties, adhesiveness, slip properties, flatting properties, abrasion resistance, and the like.

The thicknesses of the black light-blocking layers 21 and 31 can be appropriately set according to the required performance and the application and are not particularly limited. From the viewpoint of high optical density, weight reduction, and film thinning, the thicknesses of the black light-blocking layers 21 and 31 are each preferably 0.1 µm or more, more preferably 0.2 µm or more, further preferably 0.5 µm or more, and particularly preferably 1 µm or more and preferably 15 µm or less, more preferably 12 µm or less, further preferably 9 µm or less, and particularly preferably 6 µm or less on the upper limit side.

One feature of the multilayer light-blocking film 100 in this embodiment is that from a human engineering approach, it is configured so that the black light-blocking layer 21 and the black light-blocking layer 31 have different 60-degree glossinesses (G60) and/or lightness indices L*. By differentiating the 60-degree glossiness and/or the lightness L* in this manner, the front and back of the multilayer light-blocking film 100 can be discriminated in a noncontact manner, that is, visually, based on the difference in glossy feeling, luster, or lightness between the black light-blocking layer 21 and the black light-blocking layer 31.

At this time, the difference between the 60-degree glossiness of the black light-blocking layer 21 and the 60-degree glossiness of the black light-blocking layer 31 should be appropriately set considering the balance of discriminability and the blackness (light-blocking properties) and is not particularly limited but is preferably 1.0 to 4.5%, more preferably 1.5 to 4.0%, and further preferably 2.0 to 3.0%. In order to provide such a difference in 60-degree glossiness, for example, the 60-degree glossiness of the black light-blocking layer 21 should be 1.0 to 5.0, and the 60-degree glossiness of the black light-blocking layer 21 should be 0.1 to 0.9.

The difference in lightness is represented by the lightness L* in the CIE 1976 L*a*b* color system, and the difference in lightness L* is 1 to 20, preferably 2 to 15, and more preferably 3 to 10.

The method for adjusting the 60-degree glossinesses and/or lightness indices L* of the black light-blocking layer 21 and the black light-blocking layer 31 includes, but is not particularly limited to, a method of differentiating the content of the black pigment between the black light-blocking layer 21 and the black light-blocking layer 31, a method of using black pigments having different blacknesses for the black light-blocking layer 21 and the black light-blocking layer 31, a method of using black pigments of different sizes for the black light-blocking layer 21 and the black light-blocking layer 31, a method of differentiating surface roughness between the black light-blocking layer 21 and the black light-blocking layer 31, and a method of using binder resins having different hues for the black light-blocking layer 21 and the black light-blocking layer 31. It is also possible to adjust lightness, hue, and/or saturation by blending various known additives used in light-blocking films. For these adjustment methods, the various methods can each be performed alone or can be performed in appropriate combination.

On the outer peripheral side surfaces of the black light-blocking layer 21 or 31, inclined end surfaces 22 or 32 (outer peripheral end surfaces 22 or 32) having an inclination angle θ corresponding to that of the above-described inclined end surfaces 12 are provided on both side surfaces (two places). These inclined end surfaces 22 and 32 are provided so as to be exposed in a planar view from the normal direction of the major surface 21a of the black light-blocking layer 21 so as to be visible from the major surface 21a side of the black light-blocking layer 21 when the black light-blocking layers 21 and 31 are brought into a flat state as shown in Figure 2 (see Figure 3). Specifically, the inclination angle θ between the major surface 21a of the black light-blocking layer 21 and the inclined end surface 22 or 32 is set to be 10 to 87°. As long as the inclined end surfaces 22 and 32 are visible from the major surface 21a side of the black light-blocking layer 21, for example, transparent or semitransparent protective layers or the like may be provided on the inclined end surfaces 22 and 32 for film end surface strengthening. By configuring the black light-blocking layers 21 and 31 in this manner and using the difference in hue, saturation, lightness, transparency, 60-degree glossiness, total light transmittance, or the like between the substrate film 11 and the black light-blocking layers 21 and 31, the discriminability of the black light-blocking layers 21 and 31 improves further. Here, the inclination angle θ of the inclined end surface 22 or 32 is not particularly limited but is preferably 10 to 87°, more preferably 35 to 85°, further preferably 40 to 83°, and particularly preferably 45 to 80° like the inclined end surface 12. By setting an inclination angle equal or nearly equal to that of the inclined end surface 12, the end surface strength tends to be easily maintained high, and the productivity tends to be easily improved.

The black light-blocking layers 21 and 31 may contain various additives known in the industry. Specific examples thereof include, but are not particularly limited to, matting agents (flatting agents), lubricants, conductive agents, flame retardants, antimicrobial agents, fungicides, antioxidants, plasticizers, leveling agents, flow-adjusting agents, antifoaming agents, and dispersing agents. Examples of the matting agents include, but are not particularly limited to, organic fine particles such as crosslinked polymethyl methacrylate particles and crosslinked polystyrene particles, and inorganic fine particles such as silica, magnesium aluminometasilicate, and titanium oxide. Examples of the lubricants include, but are not particularly limited to, hydrocarbon-based lubricants such as polyethylene, paraffins, and waxes; fatty acid-based lubricants such as stearic acid and 12-hydroxystearic acid; amide-based lubricants such as stearic acid amide, oleic acid amide, and erucic acid amide; ester-based lubricants such as butyl stearate and stearic acid monoglyceride; alcohol-based lubricants; solid lubricants such as metallic soaps, talc, and molybdenum disulfide; silicone resin particles, and particles of fluororesins such as polytetrafluoroethylene waxes and polyvinylidene fluoride. Among these, particularly organic lubricants are preferably used. When an ultraviolet curable resin or an electron beam curable resin is used as the binder resin, for example, a sensitizer such as n-butylamine, triethylamine, or tri-n-butylphosphine, and an ultraviolet absorbing agent may be used. One of these can be used alone, and two or more of these can also be used in combination. The content of these is not particularly limited, but the content of each is generally preferably 0.01 to 5% by mass in terms of solids based on all resin components contained in the black light-blocking layer 21 or 31.

In addition, the black light-blocking layers 21 and 31 preferably have a visible light reflectance of 10.0% or less. Here, the visible light reflectance means relative total light reflectance when light is allowed to enter at an incidence angle of 8° to the black light-blocking layer 21 or 31 using a spectrophotometer (spectrophotometer SolidSpec-3700 manufactured by SHIMADZU CORPORATION, or the like) and barium sulfate as a standard plate. From the viewpoint of having higher light-blocking properties, and the like, the visible light reflectances of the black light-blocking layers 21 and 31 are more preferably 8% or less, further preferably 6% or less, and particularly preferably 4% or less. From the viewpoint of increasing the discriminability of the black light-blocking layers 21 and 31, the difference in visible light reflectance between the black light-blocking layer 21 and the black light-blocking layer 31 is preferably 1% or more. As the multilayer light-blocking film 100, the diffuse reflectance in the range of infrared light (800 to 1000 nm) other than visible light is preferably 10% or less, more preferably 8% or less, further preferably 6% or less, and particularly preferably 4% or less.

Further, the black light-blocking layers 21 and 31 preferably have a surface resistivity of less than 1.0 × 10⁸ Ω, more preferably less than 1.0 × 10⁵ Ω, and further preferably less than 5.0 × 10⁴ Ω from the viewpoint of having sufficient antistatic performance. As used herein, the surface resistivity is a value measured in accordance with JIS-K6911: 1995.

The method for manufacturing the multilayer light-blocking film 100 is not particularly limited as long as one having the above-described configuration is obtained. From the viewpoint of manufacturing the black light-blocking layers 21 and 31 on the substrate film 11 with good reproducibility, simply, and at low cost, conventionally known application methods such as doctor coating, dip coating, roll coating, bar coating, die coating, blade coating, air knife coating, kiss coating, spray coating, and spin coating are preferably used.

For example, the black light-blocking layer 21 or 31 can be formed on the substrate film 11 by applying onto a major surface of the substrate film 11 an application liquid containing in a solvent the binder resin and the black pigment described above and additives as optional components blended as needed, drying the application liquid, and then performing heat treatment, pressurization treatment, and the like as needed. As the solvent of the application liquid used here, water; ketone-based solvents such as methyl ethyl ketone, methyl isobutyl ketone, and cyclohexanone; ester-based solvents such as methyl acetate, ethyl acetate, and butyl acetate; ether-based solvents such as methyl cellosolve and ethyl cellosolve; alcohol-based solvents such as methyl alcohol, ethyl alcohol, and isopropyl alcohol, and mixed solvents thereof, and the like can be used. In order to improve the adhesion between the substrate film 11 and the black light-blocking layer 21 or 31, anchor treatment, corona treatment, or the like can also be performed as needed. Further, an intermediate layer such as a primer layer or an adhesive layer can also be provided between the substrate film 11 and the black light-blocking layer 21 or 31 as needed. The multilayer light-blocking film 100 having the desired shape can also be simply obtained by various known forming methods such as compression molding, injection molding, blow molding, transfer molding, and extrusion. Once a sheet shape is formed, then vacuum forming, pressure forming, or the like can also be performed.

The method for forming the inclined end surfaces 12, 22, and 32 is not particularly limited either. The inclined end surfaces 12, 22, and 32 having any inclination angle θ can be made by appropriately applying various known methods. For example, the inclined end surfaces 12, 22, and 32 can be simply provided by providing a multilayer light-blocking film in which the black light-blocking layer 21 and the black light-blocking layer 31 are provided on the substrate film 11, and cutting off (cutting out) its outer peripheral side surfaces at the above-described inclination angle. When the inclined end surfaces 22 and 32 are unnecessary, it is recommended to provide the substrate film 11 previously provided with the inclined end surfaces 12 having any inclination angle θ and provide the black light-blocking layer 21 and the black light-blocking layer 31 on this substrate film 11.

### (Operation)

In the multilayer light-blocking film 100 and the web roll 200 in this embodiment, the first black light-blocking layer 21 and the second black light-blocking layer 31 having an optical density of 2.5 or more and a 60-degree glossiness of 5.0% or less are adopted. Therefore, by using these as a light-blocking member for optical equipment such as a lens unit or a camera module, unnecessary incident light and reflected light can be removed, the occurrence of halation, lens flare, a ghost, and the like can be prevented, and the image quality of a picked-up image can be improved.

Moreover, the first black light-blocking layer 21 and the second black light-blocking layer 31 have different 60-degree glossinesses and/or lightness indices L*, and therefore the discrimination of the front and back surfaces can be easily performed in a noncontact manner, that is, visually, based on the difference in glossy feeling, luster, or lightness between the first black light-blocking layer 21 and the second black light-blocking layer 31. In addition, the inclined end surfaces 12 visibly exposed in a planar view are recognizable as bright portions having a glossy feeling at the outer peripheral edges of the film, and therefore the discrimination of the front and back surfaces of the multilayer light-blocking film 100 can be especially easily performed in a noncontact manner, that is, visually. This is due to the difference in hue, saturation, lightness, transparency, 60-degree glossiness, total light transmittance, or the like between the first black light-blocking layer 21 or the second black light-blocking layer 31 and the inclined end surfaces 12 (the substrate film 11).

Also when the multilayer light-blocking film 100 and the web roll 200 in this embodiment are handled in a dark place, the inclined end surfaces 12 function effectively. In other words, the inclined end surfaces 12 (the substrate film 11) are clearly recognizable as bright portions having a glossy feeling, even with a little light, due to the difference from the first black light-blocking layer 21 and the second black light-blocking layer 31. In addition, the discrimination of the front and back surfaces can also be performed by directly touching the inclined end surface 12 with fingers or the like to confirm its inclination direction.

### (Modifications)

The present invention can be carried out by making any changes within the limits of the claimed invention. For example, only the inclined end surfaces 12 may be provided without providing the inclined end surfaces 22 and 32. In addition, for the place where the inclined end surface 12 is formed, the inclined end surface 12 should be provided on at least part of the outer peripheral side surfaces of the substrate film 11. Further, the inclined end surface 12 may be provided on both side surfaces (two places) of the substrate film 11 so as to extend in the MD direction of the multilayer light-blocking film 100 as in this embodiment, or provided on one side surface (one place) or both side surfaces (two places) of the substrate film 11 so as to extend in the TD direction of the substrate film 11. Alternatively, the inclined end surfaces 12 may be provided over all of the outer peripheral side surfaces (entire periphery) of the substrate film 11. In addition, the inclined end surfaces 12 extending in the MD direction and/or the TD direction may be continuously formed as in this embodiment and may be intermittently formed.

### (Second Embodiment)

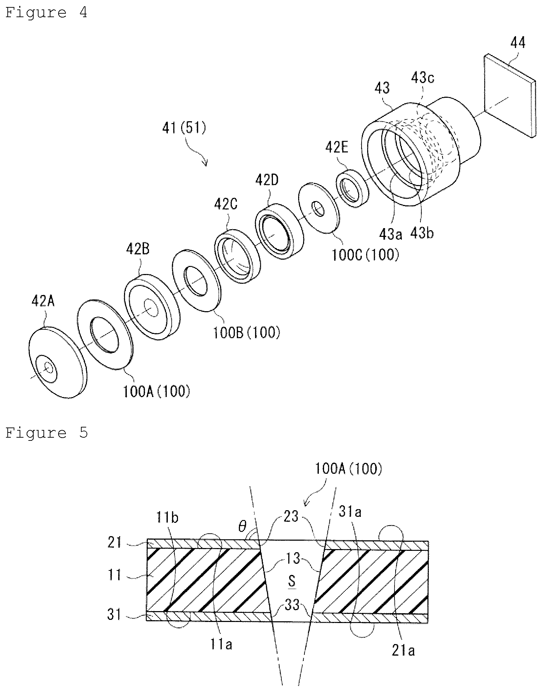

Figure 4 is an exploded perspective view schematically showing a lens unit 41 and a camera module 51 in a second embodiment of the present invention. The lens unit 41 is composed of a lens group 42 (lenses 42A, 42B, 42C, 42D, and 42E), a multistage cylindrical holder 43, and light-blocking rings 100A, 100B, and 100C for optical equipment (the multilayer light-blocking films 100) as light-blocking spacers. A plurality of height difference portions 43a, 43b, and 43c are provided in the inner peripheral portion of the holder 43. Using these height difference portions 43a, 43b, and 43c, the lens group 42 and the light-blocking rings 100A, 100B, and 100C for optical equipment are housed and disposed at predetermined positions in the holder 43 in a state of being coaxially (on the same optical axis) disposed and stacked. Here, as the lenses 42A, 42B, 42C, 42D, and 42E, various lenses such as convex lenses and concave lenses can be used, and their curved surfaces may be spherical or aspherical. On the other hand, the camera module 51 is composed of the above-described lens unit 41 and an image pickup device 44 such as a CCD image sensor or a CMOS image sensor that is disposed on the optical axis of this lens unit 41 and picks up an image of an object through the lens unit 41.

Figure 5 is a cross-sectional view schematically showing the light-blocking ring 100A for optical equipment. The light-blocking ring 100A for optical equipment is obtained by stamping the multilayer light-blocking film 100 in the first embodiment described above into a ring shape (hollow tubular shape). Therefore, the light-blocking ring 100A for optical equipment has the same multilayer structure as the multilayer light-blocking film 100 in the first embodiment described above.

The light-blocking ring 100A for optical equipment is a light-blocking plate whose outer shape is a ring shape (hollow tubular shape) in which a cylindrical hollow portion S is provided at a generally central position in a planar view. In this embodiment, the above-described inclined end surfaces 12, 22, and 32 are not provided on the outer peripheral side surface of the light-blocking ring 100A for optical equipment, and these outer peripheral side surfaces are formed in a rectangular shape in a cross-sectional view. In other words, in the light-blocking ring 100A for optical equipment in this embodiment, the inclination angle θ of the outer peripheral end surface is 90°. On the other hand, in the light-blocking ring 100A for optical equipment in this embodiment, inclined end surfaces 13, 23, and 33 corresponding to the above-described inclined end surfaces 12, 22, and 32 are provided on the inner peripheral end surface. The light-blocking rings 100B and 100C for optical equipment have the same configuration as the light-blocking ring 100A for optical equipment except that the size of the outer diameter and the size of the outer diameter of the hollow portion S are each different, and redundant description is omitted here.

### (Operation)

Also in the light-blocking rings 100A, 100B, and 100C for optical equipment in this embodiment, the first black light-blocking layer 21 and the second black light-blocking layer 31 having an optical density of 2.5 or more and a 60-degree glossiness of 5.0% or less are adopted. Therefore, by using these as light-blocking members for optical equipment such as a lens unit or a camera module, unnecessary incident light and reflected light can be removed, the occurrence of halation, lens flare, a ghost, and the like can be prevented, and the image quality of a picked-up image can be improved.

Moreover, the first black light-blocking layer 21 and the second black light-blocking layer 31 have different 60-degree glossinesses and/or lightness indices L*, and therefore the discrimination of the front and back surfaces of the light-blocking rings 100A, 100B, and 100C for optical equipment can be easily performed in a noncontact manner, that is, visually, based on the difference in glossy feeling, luster, or lightness between the first black light-blocking layer 21 and the second black light-blocking layer 31. Therefore, for the lens unit 41 and the camera module 51 using these light-blocking rings 100A, 100B, and 100C for optical equipment, also during their storage and incorporation, manufacturing failure such as poor incorporation based on the false recognition of the front and back surfaces is inhibited.

Furthermore, in the light-blocking ring 100A for optical equipment in this embodiment, the inclined end surfaces 13, 23, and 33 are provided, and the discriminability of the black light-blocking layers 21 and 31 is further increased. By providing the inclined end surfaces 13, 23, and 33 on the end surface on the optical axis side (inner peripheral end surface) in this manner, unnecessary reflected light can be removed, the occurrence of halation, lens flare, a ghost, and the like can be prevented, and the image quality of a picked-up image can be improved.

### (Modifications)

The present invention can be carried out by making any changes within the limits of the claimed invention. For example, for the outer shape of the multilayer light-blocking film 100 (the light-blocking ring 100A, 100B, or 100C for optical equipment), for example, any shape such as a polygonal shape such as a rectangular shape, a square shape, or a hexagonal shape, an elliptical shape, or an irregular shape in a planar view can be adopted. In addition, also for the shape of the hollow portion S of the light-blocking ring 100A, 100B, or 100C for optical equipment, the hollow portion S is formed in a circular shape in a planar view in this embodiment, but its outer shape is not particularly limited. For example, any shape such as a polygonal shape such as a rectangular shape, a square shape, or a hexagonal shape, an elliptical shape, or an irregular shape in a planar view can be adopted. Further, in this embodiment, the above-described inclined end surfaces 12, 22, and 32 are not provided, but either one or both of the inclined end surface 12 and the inclined end surfaces 22 and 32 can be appropriately provided as needed.

### Industrial Applicability

The present invention can be widely and effectively used as a high-performance light-blocking member in the precision machine field, the semiconductor field, the optical equipment field, electronic equipment, and the like. Especially, the present invention can be particularly effectively used as a light-blocking member used in a lens unit, a camera module, or the like mounted in a high-performance single-lens reflex camera, a compact camera, a video camera, a cellular phone, a projector, or the like.

### Reference Signs List

- 11: substrate film
- 11a: surface (major surface)
- 11b: surface (major surface)
- 12: inclined end surface
- 13: inclined end surface
- 21: black light-blocking layer
- 21a: surface (major surface)
- 22: inclined end surface
- 23: inclined end surface
- 31: black light-blocking layer
- 31a: surface (major surface)
- 32: inclined end surface
- 33: inclined end surface
- 41: lens unit
- 42: lens group
- 42A: lens
- 42B: lens
- 42C: lens
- 42D: lens
- 42E: lens
- 43: holder
- 43a: height difference portion
- 43b: height difference portion
- 43c: height difference portion
- 44: image pickup device
- 51: camera module
- 100: multilayer light-blocking film
- 100A: light-blocking ring for optical equipment (multilayer light-blocking film)
- 100B: light-blocking ring for optical equipment (multilayer light-blocking film)
- 100C: light-blocking ring for optical equipment (multilayer light-blocking film)
- 200: web roll
- θ: inclination angle
- S: hollow portion
- MD: flow direction
- TD: vertical direction

## Claims

1. A multilayer light-blocking film (100) for optical equipment comprising:
a multilayer structure comprising at least a first black light-blocking layer (21) and a second black light-blocking layer (31), the first black light-blocking layer being disposed on the outermost surface on the front side of the multilayer structure and the second black light-blocking layer being disposed on the outermost surface on the back side of the multilayer structure,
wherein the first black light-blocking layer and the second black light-blocking layer each have an optical density of 2.5 or more and a 60-degree glossiness of 5.0% or less,
**characterized in that** the first black light-blocking layer has a lightness L* in the CIE 1976 L*a*b* color system which is different from a lightness L* of the second black light-blocking layer, the difference in lightness L* being 1 to 20.

2. The multilayer light-blocking film (100) for optical equipment according to claim 1, wherein
the first black light-blocking layer (21) and/or the second black light-blocking (31) layer have inclined end surfaces (22, 32) so that a film width increases from the first black light-blocking layer toward the second black light-blocking layer, and
the inclined end surface is exposed in a planar view seen from a normal direction of a major surface of the first black light-blocking layer.

3. The multilayer light-blocking film for optical equipment according to claim 1 or 2, wherein
the first black light-blocking layer (21) and/or the second black light-blocking layer (31) has a hollow portion (S) and an inclined end surface (22, 32) on an inner peripheral of the hollow portion.

4. The multilayer light-blocking film (100) for optical equipment according to any one of claims 1 to 3, wherein
the first black light-blocking layer (21) has a 60-degree glossiness different from a 60-degree glossiness of the second black light-blocking layer (31), and
a difference between the 60-degree glossiness of the first black light-blocking layer and the 60-degree glossiness of the second black light-blocking layer is 1.0 to 4.5%.

5. The multilayer light-blocking film (100) for optical equipment according to any one of claims 1 to 4, comprising:
a multilayer structure comprising at least a substrate film (11), the first black light-blocking layer (21) provided on one major surface side of the substrate film, and the second black light-blocking layer (22) provided on the other major surface side of the substrate film.

6. A light-blocking ring (100A) for optical equipment, having a ring-shaped outer shape, and comprising a multilayer light-blocking film (100) according to any one of claims 1 to 5.

7. A lens unit (41) comprising a plurality of lenses (42A-E) and at least one or more light-blocking plates stacked in an optical axis direction of the lenses, wherein
at least one or more of the light-blocking plates comprise the multilayer light-blocking film (100) for optical equipment according to any one of claims 1 to 5 and/or the light-blocking ring (100A-C) for optical equipment according to claim 6.

8. A camera module (51) comprising at least: a lens unit (41) comprising a plurality of lenses (42A-E) and at least one or more light-blocking plates stacked in an optical axis direction of the lenses; and an image pickup device (44) for picking up an image of an object through the lens unit, wherein
at least one or more of the light-blocking plates comprise the multilayer light-blocking film (100) for optical equipment according to any one of claims 1 to 5 and/or the light-blocking ring (100A-C) for optical equipment according to claim 6.

## Patentansprüche

1. Mehrschichtiger lichtblockierender Film (100) für optische Ausrüstung, umfassend:
eine mehrschichtige Struktur, umfassend mindestens eine erste schwarze lichtblockierende Schicht (21) und eine zweite schwarze lichtblockierende Schicht (31), wobei die erste schwarze lichtblockierende Schicht auf der äußersten Oberfläche auf der Vorderseite der mehrschichtigen Struktur angeordnet ist und die zweite schwarze lichtblockierende Schicht auf der äußersten Oberfläche auf der Rückseite der mehrschichtigen Struktur angeordnet ist,
wobei die erste schwarze lichtblockierende Schicht und die zweite schwarze lichtblockierende Schicht jeweils eine optische Dichte von 2,5 oder mehr und einen 60-Grad-Glanz von 5,0 % oder weniger aufweisen,
**gekennzeichnet dadurch, dass** die erste schwarze lichtblockierende Schicht eine Helligkeit L* im CIE 1976 Lab*-Farbsystem aufweist, die sich von einer Helligkeit L* der zweiten schwarzen lichtblockierenden Schicht unterscheidet, wobei der Unterschied in der Helligkeit L* 1 bis 20 beträgt.

2. Mehrschichtiger lichtblockierender Film (100) für optische Ausrüstung nach Anspruch 1, wobei
die erste schwarze lichtblockierende Schicht (21) und/oder die zweite schwarze lichtblockierende Schicht (31) geneigte Endflächen (22, 32) aufweisen, so dass eine Filmbreite von der ersten schwarzen lichtblockierenden Schicht zu der zweiten schwarzen lichtblockierenden Schicht hin zunimmt, und
die geneigte Endfläche in einer Draufsicht aus einer Normalenrichtung einer Hauptoberfläche der ersten schwarzen lichtblockierenden Schicht freigelegt ist.

3. Mehrschichtiger lichtblockierender Film für optische Ausrüstung nach Anspruch 1 oder 2, wobei
die erste schwarze lichtblockierende Schicht (21) und/oder die zweite schwarze lichtblockierende Schicht (31) einen Hohlabschnitt (S) und eine geneigte Endfläche (22, 32) an einem Innenumfang des Hohlabschnitts aufweist.

4. Mehrschichtiger lichtblockierender Film (100) für optische Ausrüstung nach einem der Ansprüche 1 bis 3, wobei
die erste schwarze lichtblockierende Schicht (21) einen 60-Grad-Glanz aufweist, der sich von einem 60-Grad-Glanz der zweiten schwarzen lichtblockierenden Schicht (31) unterscheidet, und
ein Unterschied zwischen dem 60-Grad-Glanz der ersten schwarzen lichtblockierenden Schicht und dem 60-Grad-Glanz der zweiten schwarzen lichtblockierenden Schicht 1,0 bis 4,5 % beträgt.

5. Mehrschichtiger lichtblockierender Film (100) für optische Ausrüstung nach einem der Ansprüche 1 bis 4, umfassend:
eine mehrschichtige Struktur, die mindestens einen Substratfilm (11) umfasst, wobei die erste schwarze lichtblockierende Schicht (21) auf einer Hauptoberflächenseite des Substratfilms vorgesehen ist und die zweite schwarze lichtblockierende Schicht (22) auf der anderen Hauptoberflächenseite des Substratfilms vorgesehen ist.

6. Lichtblockierender Ring (100A) für optische Ausrüstung, der eine ringförmige äußere Form aufweist und einen mehrschichtigen lichtblockierenden Film (100) nach einem der Ansprüche 1 bis 5 umfasst.

7. Linseneinheit (41), umfassend mehrere Linsen (42A-E) und mindestens eine oder mehrere lichtblockierende Platten, die in einer optischen Achsenrichtung der Linsen gestapelt sind, wobei
mindestens eine oder mehrere der lichtblockierenden Platten den mehrschichtigen lichtblockierenden Film (100) für optische Ausrüstung nach einem der Ansprüche 1 bis 5 und/oder den lichtblockierenden Ring (100A-C) für optische Ausrüstung nach Anspruch 6 umfassen.

8. Kameramodul (51), mindestens umfassend: eine Linseneinheit (41), die mehrere Linsen (42A-E) und mindestens eine oder mehrere lichtblockierende Platten umfasst, die in einer optischen Achsenrichtung der Linsen gestapelt sind; und eine Bildaufnahmevorrichtung (44) zum Aufnehmen eines Bildes eines Objekts durch die Linseneinheit, wobei
mindestens eine oder mehrere der lichtblockierenden Platten den mehrschichtigen lichtblockierenden Film (100) für optische Ausrüstung nach einem der Ansprüche 1 bis 5 und/oder den lichtblockierenden Ring (100A-C) für optische Ausrüstung nach Anspruch 6 umfassen.

## Revendications

1. Film multicouche bloquant la lumière (100) pour équipement optique, comprenant :
une structure multicouche comprenant au moins une première couche noire bloquant la lumière (21) et une deuxième couche noire bloquant la lumière (31), la première couche noire bloquant la lumière étant disposée sur la surface la plus extérieure sur le côté avant de la structure multicouche et la deuxième couche noire bloquant la lumière étant disposée sur la surface la plus extérieure sur le côté arrière de la structure multicouche,
dans lequel la première couche noire bloquant la lumière et la deuxième couche noire bloquant la lumière ont chacune une densité optique de 2,5 ou plus et une brillance à 60 degrés de 5,0% ou moins,
**caractérisé en ce que** la première couche noire bloquant la lumière a une clarté L* dans le système couleur CIE 1976 L*a*b* qui est différente d'une clarté L* de la deuxième couche noire bloquant la lumière, la différence de clarté L* étant 1 à 20.

2. Film multicouche bloquant la lumière (100) pour équipement optique selon la revendication 1, dans lequel
la première couche noire bloquant la lumière (21) et/ou la deuxième couche noire bloquant la lumière (31) ont des surfaces d'extrémité inclinées (22, 32) de telle sorte qu'une largeur de film augmente de la première couche noire bloquant la lumière vers la deuxième couche noire bloquant la lumière, et
la surface d'extrémité inclinée est exposée dans une vue en plan depuis un sens normal d'une surface principale de la première couche noire bloquant la lumière.

3. Film multicouche bloquant la lumière (100) pour équipement optique selon la revendication 1 ou 2, dans lequel
la première couche noire bloquant la lumière (21) et/ou la deuxième couche noire bloquant la lumière (31) ont une partie creuse (S) et une surface d'extrémité inclinée (22, 32) sur une périphérie intérieure de la partie creuse.

4. Film multicouche bloquant la lumière (100) pour équipement optique selon l'une quelconque des revendications 1 à 3, dans lequel
la première couche noire bloquant la lumière (21) a une brillance à 60 degrés différente d'une brillance à 60 degrés de la deuxième couche noire bloquant la lumière (31), et
une différence entre la brillance à 60 degrés de la première couche de blocage de la lumière et la brillance à 60 degrés de la deuxième couche de blocage de la lumière est 1,0 à 4,5%.

5. Film multicouche bloquant la lumière (100) pour équipement optique selon l'une quelconque des revendications 1 à 4, comprenant :
une structure multicouche comprenant au moins un film substrat (11), la première couche noire bloquant la lumière (21) prévue sur un côté de surface principale du film substrat, et la deuxième couche noire bloquant la lumière (31) prévue sur l'autre côté de surface principale du film substrat.

6. Bague bloquant la lumière (100A) pour équipement optique, ayant une forme extérieure en forme de bague et comprenant un film multicouche bloquant la lumière (100) selon l'une quelconque des revendications 1 à 5.

7. Unité (41) d'objectif comprenant une pluralité de lentilles (42A-E) et au moins une ou plusieurs plaques bloquant la lumière empilées dans un sens d'axe optique des lentilles, dans laquelle
au moins une ou plusieurs des plaques bloquant la lumière comprend le film multicouche bloquant la lumière (100) pour équipement optique selon l'une quelconque des revendications 1 à 5 et/ou la bague bloquant la lumière (100A-C) pour équipement optique selon la revendication 6.

8. Module (51) de caméra comprenant au moins : une unité (41) d'objectif comprenant une pluralité de lentilles (42A-E) et au moins une ou plusieurs plaques bloquant la lumière empilées dans un sens d'axe optique des lentilles ; et un dispositif (44) de capture d'image pour capturer une image d'un objet au travers de l'unité d'objectif, dans lequel
au moins une ou plusieurs des plaques bloquant la lumière comprend le film multicouche bloquant la lumière (100) pour équipement optique selon l'une quelconque des revendications 1 à 5 et/ou la bague bloquant la lumière (100A-C) pour équipement optique selon la revendication 6.
